# EUROPÄISCHE PATENTSCHRIFT

(11) **EP 2 958 838 B1**
(45) Veröffentlichungstag und Bekanntmachung des Hinweises auf die Patenterteilung: **25.12.2019**
(21) Anmeldenummer: 14702806.2
(22) Anmeldetag: 31.01.2014
(51) Int. Cl.: B65G 67/08

(54) **VORRICHTUNG UND VERFAHREN ZUM TRANSPORTIEREN VON GEGENSTÄNDEN**
DEVICE AND METHOD FOR TRANSPORTING OBJECTS
DISPOSITIF ET PROCÉDÉ DE TRANSPORT D'OBJETS

(30) Priorität: 22.02.2013 DE 102013202950
(43) Veröffentlichungstag der Anmeldung: 30.12.2015
(73) Patentinhaber: Siemens Aktiengesellschaft, 80333 München (DE)
(72) Erfinder: SCHWARZBAUER, Michael, 78467 Konstanz (DE); VOGEL, Rainer, 78467 Konstanz (DE); WANNER, Bertram, 88709 Meersburg (DE); WIEHLER, Rolf, 78476 Allensbach (DE)
(74) Vertreter: Maier, Daniel Oliver
(86) Internationale Anmeldenummer: PCT/EP2014/051894
(87) Internationale Veröffentlichungsnummer: WO 2014/127972

(56) Entgegenhaltungen:
- EP-A1- 1 666 390
- WO-A1-97/39969
- WO-A1-2006/002156
- DE-A1-102011 080 096
- DE-B4- 4 245 047
- JP-A- H0 321 382
- JP-A- H07 267 351

## Beschreibung

Die Erfindung betrifft eine Transportvorrichtung zum Transportieren von Gegenständen in einer Transportrichtung von einem Beladebereich zu einem Entladebereich mit einer ersten und einer zweiten Fördereinheit, die in der Transportrichtung hintereinander angeordnet sind.

Die Erfindung betrifft weiterhin ein Verfahren zum Transportieren von Gegenständen, bei dem die Gegenstände in einer Transportrichtung von einem Beladebereich in einen Entladebereich gefördert werden.

Vorrichtungen und Verfahren der oben genannten Art sind aus dem Stand der Technik bekannt. So beschreiben beispielsweise die WO 2006/117003 A1 und auch die WO 98/54073 A1 jeweils Be- und Entladevorrichtungen für Gegenstände, die auf hintereinander angeordneten Förderbändern zu einem Entladebereich transportiert werden. Im Entladebereich werden die Gegenstände anschließend manuell oder automatisch von den Vorrichtungen entladen.

Die Schrift JP H 0321382 A offenbart eine Sortiervorrichtung für Früchte und Gemüse nach dem Oberbegriff des Anspruchs 1. Bedingt durch die deutlich verschiedenen Grössen der Früchte und Gemüse wird vorgeschlagen, vor der Ablage in Transportbehälter/Transportgebinden diese zu messen und in Klassifizierungsbehältern zwischen zu speichern. Diese Vorrichtung ist nur geeignet für zu sortierende Gegenstände, die sich hinsichtlich Form - mehr oder kugelförmig - nicht stark unterscheiden.

Die bekannten Vorrichtungen und Verfahren haben den Nachteil, dass das manuelle Entnehmen der Gegenstände von der Transportvorrichtung aufwendig ist und mit viel Geschick und Kreativität anschließend in einem Transportbehälter, beispielsweise einem LKW, Wechselbehälter oder Transporteinheit, gestapelt werden muss.

Daher ist es die Aufgabe der vorliegenden Erfindung, eine Transportvorrichtung und ein Verfahren zum Transportieren von Gegenständen der oben genannten Art bereitzustellen, mit dem das Stapeln der Gegenstände im Transportbehälter effizienter durchgeführt werden kann.

Für die oben genannte Transportvorrichtung wird die Aufgabe gemäss den in Patentanspruch 1 angegebenen Merkmalen gelöst.

Für das oben genannte Verfahren wird die Aufgabe gemäss den in Patentanspruch 1 angegebenen Merkmalen gelöst.

Die erfindungsgemäße Lösung hat den Vorteil, dass die separierten Gegenstandsgruppen unterschiedlich beim Entladen gehandhabt werden können und dadurch das Entladen effizienter durchgeführt werden kann. So kann beispielsweise die eine Gegenstandsgruppe nur kleine, leichte Gegenstände und die andere Gegenstandsgruppe nur große und/oder schwere Gegenstände umfassen. Da diese beiden Gegenstandsgruppen unterschiedlich entladen werden können, erhöht sich die gesamte Effizienz und der Durchsatz an Gegenständen. So werden beispielsweise die großen bzw. schweren Gegenstände zuunterst in einen Transportbehälter manuell gestapelt. Die kleinen und leichten Gegenstände können in einen oberen Bereich des Transportbehälters auf die zuvor gestapelten großen bzw. schweren Gegenstände automatisiert geschüttet werden. Die höhere Effizienz und die Entlastung des Bedieners ergibt sich also daraus, dass die Gegenstände gruppiert bereitgestellt werden und dadurch unterschiedlich entladen werden können. Die großen, schweren Gegenstände können schnell und einfach gestapelt werden. Dabei wird der zur Verfügung stehende Raum optimal ausgenutzt. Das Entladen der kleinen leichten Gegenstände kann dagegen sehr gut durch Schütten erfolgen, das bei den kleinen leichten Gegenständen unproblematisch ist. Ein Schütten von großen und/oder schweren Gegenständen ist nicht möglich, weil Beschädigungen entstehen könnten und auch keine optimale Ausnutzung des Transportvolumens stattfinden würde. Durch die erfindungsgemäße Lösung wird beim Entladen ein hoher Ausnutzungsgrad des zur Verfügung stehenden Transportraums bei gleichzeitig geringer Gefahr durch Beschädigungen erreicht.

Die erfindungsgemäße Lösung kann durch vorteilhafte Ausgestaltungen weiterentwickelt werden, die frei miteinander kombiniert werden können.

So umfasst bei der erfindungsgemäßen Transportvorrichtung das Separiermittel eine in der Transportrichtung hinter der ersten Fördereinheit angeordnete Eingangsweiche, die eine erste Stellung und eine zweite Stellung aufweist, wobei im Betrieb in der ersten Stellung die Gegenstände in die erste Gegenstandsgruppe und in der zweiten Stellung in die zweite Gegenstandsgruppe separiert werden. Dies hat den Vorteil, dass der Gegenstandsstrom - also die nacheinander geförderten Gegenstände - auf der ersten Fördereinheit von der Eingangsweiche in die zwei Gegenstandsgruppen aufgeteilt wird.

Ferner umfasst das Separiermittel eine in der Transportrichtung vor der zweiten Fördereinheit angeordnete Ausgangsweiche, die eine erste Stellung und eine zweite Stellung aufweist, wobei im Betrieb in der ersten Stellung die Gegenstände der ersten Gegenstandsgruppe und in der zweiten Stellung die Gegenstände der zweiten Gegenstandsgruppe zur zweiten Fördereinheit gefördert werden. So können die Gegenstände der beiden Gegenstandsgruppen durch die Ausgangsweiche beide auf die zweite Fördereinheit geleitet werden. So ist für den Transport zum Entladebereich nur eine Fördereinheit für beide Gegenstandsgruppen nötig, so dass keine zusätzlichen Kosten durch separate Fördereinheiten entstehen.

Um die Gegenstände der unterschiedlichen Gegenstandsgruppen zwischenzuspeichern, können zwei jeweils einer Gegenstandsgruppe zugeordneten Speicherbereiche vorgesehen sein, in welche die Gegenstände separierbar sind. Die Speicherbereiche können zwischen der Eingangs- und/oder der Ausgangsweiche angeordnet sein, wobei die erste und zweite Stellung der Eingangs- und der Ausgangsweiche jeweils einem Speicherbereich zugeordnet sind.

In einer vorteilhaften Ausgestaltung können die Speicherbereiche in vertikaler Richtung übereinander angeordnet sein. Dies hat den Vorteil, dass die Transportvorrichtung in horizontaler Richtung wenig Raum einnimmt und dadurch bei einem begrenzten zur Verfügung stehenden Raum, wie beispielsweise in einem Transportbehälter oder LKW, ein Fluchtweg für den Bediener bestehen bleibt.

Um die Gegenstände gut in dem Separiermittel transportieren zu können, können die Eingangs- und/oder die Ausgangsweiche und/oder die Speicherbereiche als separate Fördereinheiten zum Transportieren der Gegenstände in der Transportrichtung ausgebildet sein.

Erfindungsgemäß umfasst die Transportvorrichtung eine Steuereinrichtung, die zum Steuern der Fördereinheiten und des Separiermittels ausgebildet ist. Um die verwendete Gegenstandseigenschaft zu ermitteln, umfasst die Steuereinrichtung eine Messeinrichtung, die zum Ermitteln der wenigstens einen Gegenstandseigenschaft ausgebildet ist, wobei die Steuereinrichtung das Separiermittel in Abhängigkeit von der Gegenstandseigenschaft steuert.

Ferner kann die Steuereinrichtung eine Zähleinrichtung umfassen, welche jeweils die Anzahl der Gegenstände der ersten und der zweiten Gegenstandsgruppe zählt, und kann die Steuereinrichtung das Separiermittel in Abhängigkeit von diesen Anzahlen steuern. Dies hat den Vorteil, dass das Verhältnis der Gegenstände der ersten Gegenstandsgruppe zu denen der zweiten Gegenstandsgruppe für die Gesamtheit der zu transportierenden Gegenstände bestimmt werden kann. Hierdurch können unterschiedliche vorbestimmbare Mixverhältnisse bei der Sequenz der geförderten Gegenstandsgruppen zum Entladebereich variiert und angepasst werden. So können wenige kleine Gegenstände zwischen großen Gegenständen gefördert werden, die als Füllmaterial beim Stapeln verwendet werden können.

Um die Zwischenspeicherung der Gegenstände in den beiden Speicherbereichen zu optimieren, können der erste und/oder der zweite Speicherbereich mehrere, hintereinander angeordnete Fördereinheiten umfassen. Da diese Fördereinheiten separat steuerbar sind, können beispielsweise auf der einen Seite Gegenstände in den einen Speicherbereich hinein gefördert und gleichzeitig Gegenstände aus dem anderen Speicherbereich hinaus gefördert werden.

In einer weiteren vorteilhaften Ausgestaltung kann die zweite Fördereinheit eine erste und eine zweite Stellung aufweisen, wobei jede Stellung einer der Gegenstandsgruppen zugeordnet ist. Dies hat den Vorteil, dass die zweite Fördereinheit im Entladebereich in eine für die Gegenstandsgruppe optimale Entladeposition gefahren werden kann. So können beispielsweise kleine, leichte Gegenstände von oben automatisch geschüttet werden. Zum anderen können schwere und/oder große Gegenstände manuell von der zweiten Fördereinheit entnommen und gestapelt werden, so dass die Fördereinheit hierfür entsprechend niedrig und ergonomisch positioniert wird.

Im Folgenden wird die Erfindung anhand der in den Figuren beispielhaft dargestellten Ausführungsform beschrieben.

Es zeigen:
- Figur 1: eine schematische Seitenansicht einer beispielhaften Ausführungsform der erfindungsgemäßen Transportvorrichtung in einer ersten Stellung;
- Figur 2: eine schematische Seitenansicht der erfindungsgemäßen Ausführungsform nach Figur 1 in einer zweiten Stellung.

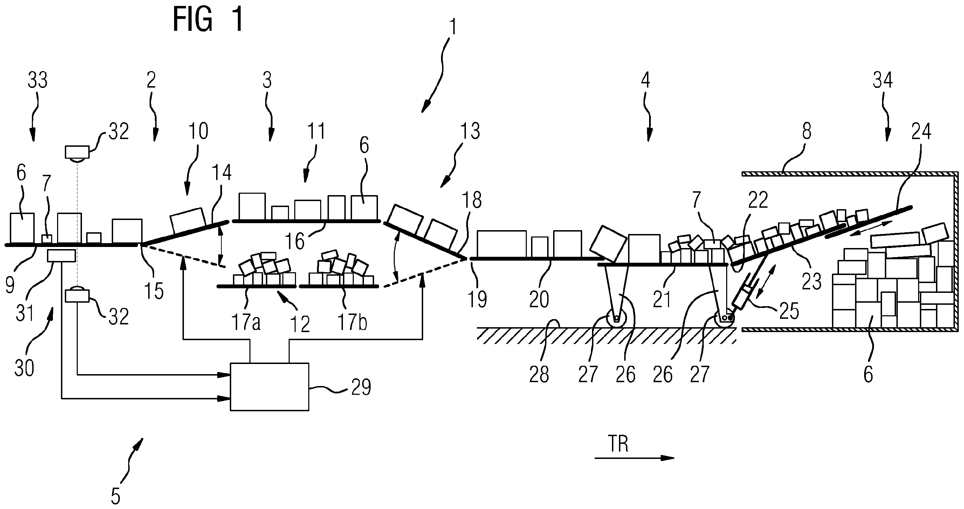

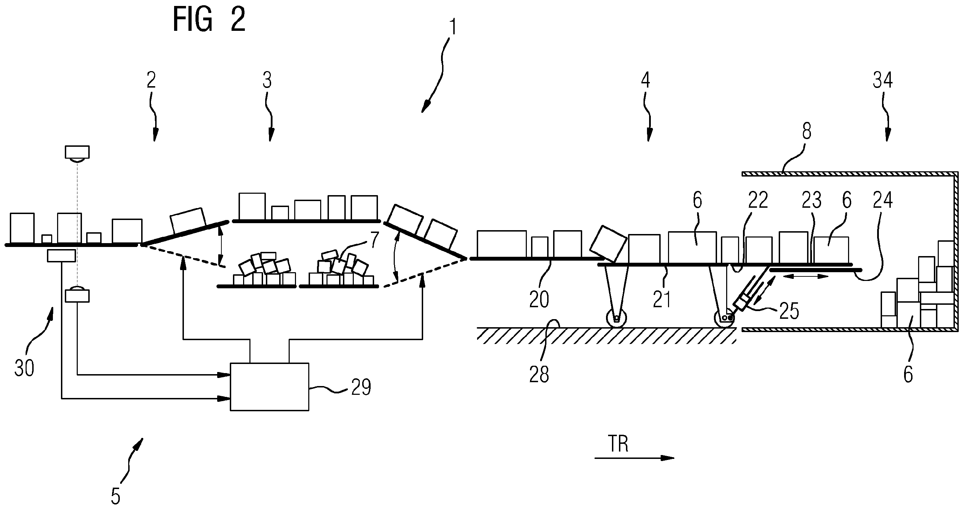

Im Folgenden wird die beispielhafte Ausführungsform der erfindungsgemäßen Transportvorrichtung 1 anhand der Figuren 1 und 2 beschrieben.

Die Transportvorrichtung 1 umfasst eine erste Fördereinheit 2, ein Separiermittel 3, eine zweite Fördereinheit 4 und eine Steuereinrichtung 5.

Mit Hilfe der Transporteinrichtung 1 können Gegenstände 6, 7, beispielsweise Pakete, in einer Transportrichtung TR zu einem Transportbehälter 8, beispielsweise einem Wechselbehälter, einem LKW-Trailer oder einer anderen Transporteinheit, gefördert werden.

Die erste Fördereinheit 2 umfasst bei der beispielhaften Ausführungsform der Figuren 1 und 2 ein waagerecht ausgerichteten Endlosförderband 9. Alternativ kann die erste Fördereinheit 2 selbstverständlich auch mehrere in der Transportrichtung TR hintereinander angeordnete Endlosförderbänder aufweisen, die separat ansteuerbar und antreibbar sind. In der lediglich schematischen Darstellung der Figuren 1 und 2 ist hierauf jedoch verzichtet. Alternativ zum Endlosförderband 9 kann die Fördereinheit 2 selbstverständlich auch Rollenbahnen oder anderen Fördermitteln aufweisen. Diese Alternative gilt auch für alle anderen Endlosförderbänder der Transporteinrichtung 1. Auf dem Endlosförderband 9 stehen hintereinander angeordnet Gegenstände 6, 7 unterschiedlicher Größe und Gewicht in zufälliger Verteilung. Im Betrieb fördert das Endlosförderband 9 die Gegenstände 6, 7 in die Transportrichtung TR. Gesteuert wird das Endlosförderband 9 von der Steuereinrichtung 5, mit der die erste Fördereinheit 2 signaltechnisch verbunden ist.

In der Transportrichtung TR anschließend an die erste Fördereinheit 2 ist das Separiermittel 3 angeordnet. Das Separiermittel 3 weist eine Eingangsweiche 10, einen ersten Speicherbereich 11, einen zweiten unterhalb des ersten Speicherbereichs 11 angeordneten zweiten Speicherbereich 12 und eine Ausgangsweiche 13 auf.

Die Eingangsweiche 10 umfasst bei der beispielhaften Ausführungsform der Figuren 1 und 2 ein Endlosförderband 14, das zwischen einer oberen Stellung (als Volllinie dargestellt) und einer unteren Stellung (als Strichlinie dargestellt) geschwenkt werden kann. Dabei bildet das in der Transportrichtung TR vordere Ende des Endlosförderbandes 14 eine Drehachse 15, die quer zur Transportrichtung TR und quer zur Zeichnungsebene verläuft und um die das Endlosförderband 14 zwischen der oberen und der unteren Stellung schwenkbar ist. Dabei ist die Drehachse 15 so positioniert, dass das vordere Ende des Endlosförderbands 14 in vertikaler Richtung mit dem hinteren Ende des Endlosförderbands 9 der ersten Fördereinheit 2 fluchtet. Das in Transportrichtung TR hintere Ende des Endlosförderbands 14 fluchtet in der oberen Stellung in vertikaler Richtung in etwa mit dem ersten Speicherbereich 11. In der unteren Stellung der Eingangsweiche 10 ist das hintere Ende des Endlosförderbands 14 etwas oberhalb des zweiten Speicherbereichs 12 angeordnet, um gegebenenfalls eine Schüttung von kleinen Gütern vorzunehmen. Alternativ könnte es auch fluchten.

Der erste Speicherbereich 11 umfasst ein horizontal ausgerichtetes Endlosförderband 16. Der zweite Speicherbereich 12 umfasst zwei in der Transportrichtung TR hintereinander, zueinander fluchtende Endlosförderbänder 17a, 17b. Die Endlosförderbänder 17a, 17b sind parallel zu und in vertikaler Richtung unterhalb des Endlosförderbands 16 angeordnet.

Die Ausgangsweiche 13 ist wie die Eingangsweiche 10 von einer oberen Stellung (als Volllinie dargestellt) in eine untere Stellung (als Strichlinie dargestellt) schwenkbar. Ebenfalls umfasst die Ausgangsweiche 13 ein Endlosförderband 18. Bei der Ausgangsweiche 13 ist das in Transportrichtung TR hintere Ende des Endlosförderbands 18 als Drehachse 19 fixiert. Das Endlosförderband ist so angeordnet, dass sein hinteres Ende mit dem vorderen Ende der zweiten Fördereinheit 4 fluchtet. Das vordere Ende des Endlosförderbands 18 fluchtet in der oberen Stellung der Ausgangsweiche 13 mit dem Endlosförderband 16 des ersten Speicherbereichs. In der unteren Stellung der Ausgangsweiche 13 fluchtet das vordere Ende des Endlosförderbands 18 in etwa mit dem hinteren Ende des Endlosförderbands 17b des zweiten Speicherbereichs 12.

Die Eingangsweiche 10 und die Ausgangsweiche 13 weisen geeignete Antriebe (nicht dargestellt) auf, um sie jeweils zwischen der oberen Stellung und der unteren Stellung hin- und herzuschwenken. Diese Antriebe können beispielsweise Pneumatikzylinder, Hydraulikzylinder, Spindelantriebe oder ähnliches sein. Die Eingangsweiche 10, die Ausgangsweiche 13 und die Speicherbereiche 11, 12 sind jeweils signaltechnisch mit der Steuereinrichtung 5 verbunden.

In der Transportrichtung TR ist an das Separiermittel 3 anschließend die zweite Fördereinheit 4 angeordnet. Die zweite Fördereinheit 4 umfasst in der beispielhaften Ausführungsform in Figur 1 und 2 zwei im Wesentlichen horizontal ausgerichtete Endlosförderbänder 20, 21 und zwei um ein Schwenkgelenk 22 schwenkbare Endlosförderbänder 23, 24. Ferner umfasst die zweite Fördereinheit 4 einen Schwenkantrieb 25.

Das Endlosförderband 20 fluchtet mit seinem in der Transportrichtung TR vorderen Ende mit dem hinteren Ende des Endlosförderbands 18 der Ausgangsweiche 13. Die Endlosförderbänder 20, 21 sind im Wesentlichen horizontal ausgerichtet und parallel zueinander angeordnet. Sie sind so miteinander verbunden, dass sie teleskopierbar sind - also auseinander- und zusammengeschoben werden können. In der Darstellung der Figuren 1 und 2 sind die Endlosförderbänder 20, 21 in teleskopisch ausgefahrener Position dargestellt. In eingefahrener Position (nicht dargestellt) kann das Endlosförderband 21 stärker überlappend zum Endlosförderband 20 angeordnet werden, so dass sich die Länge der zweiten Fördereinheit 4 in der Transportrichtung TR verkürzt. Das Endlosförderband 21 weist zwei Stützen 26 mit Rädern 27 auf, die auf einem Boden 28, der beispielsweise eine Beladebrücke sein kann, stehen. Durch die Räder 27 kann das Endlosförderband 21 leicht bewegt und dadurch ein- und ausgefahren werden. Das Endlosförderband 23 fluchtet an seinem vorderen Ende mit dem hinteren Ende des Endlosförderbands 21 und ist um das Schwenkgelenk 22 horizontal und vertikal schwenkbar. In Figur 1 ist eine erste Schwenkstellung, in Figur 2 eine zweite Schwenkstellung dargestellt. Das Endlosförderband 24 ist parallel zum Endlosförderband 23 angeordnet und zu diesem teleskopierbar. Figur 1 zeigt das Endlosförderband 24 in einer ausgefahrenen Stellung, Figur 2 zeigt es in einer eingefahrenen Stellung.

Die Steuereinrichtung 5 umfasst eine SPS-Steuerung 29, und eine Messeinrichtung 30. Die SPS-Steuerung 29 ist signaltechnisch mit den Fördereinheiten 2, 4, dem Separiermittel 3 und der Messeinrichtung 30 signaltechnisch verbunden und steuert diese während des Betriebs.

Die Messeinrichtung 30 umfasst eine Wiegeeinheit 31 und eine Größenmesseinheit 32, die beispielsweise Lichtschranken aufweist.

Im Folgenden wird die Funktion der erfindungsgemäßen Transportvorrichtung 1 im Betrieb beschrieben.

Die Transportvorrichtung 1 fördert Gegenstände 6, 7 unterschiedlicher Größe und/oder Gewicht von einem Beladebereich 33, in dem die Gegenstände 6, 7 auf die Transportvorrichtung 1 geladen werden, zu einem Endladebereich 34. In dem Endladebereich 34 werden die Gegenstände 6, 7 von der Transportvorrichtung 1 entnommen, was manuell oder automatisch, z. B. durch Schütten, geschehen kann.

Im Beladebereich 33 kommen ein zufälliger Mix aus großen und/oder schweren Gegenständen 6 und kleinen und leichten Gegenständen 7 hintereinander auf die erste Fördereinheit 2. Dies kann beispielsweise durch eine vorgelagerte Sortiermaschine geschehen, die alle Gegenstände 6, 7 für den Transportbehälter 8 der Transporteinrichtung 1 zuweist. Das Endlosförderband 9 der ersten Fördereinheit 2 fördert die Gegenstände 6, 7 in der Transportrichtung TR weiter. Dabei ermittelt die Messeinrichtung 30 mindestens eine Gegenstandseigenschaft für jeden Gegenstand 6, 7. Eine Gegenstandseigenschaft ist hierbei die äußere Abmessung bzw. das Volumen jedes Gegenstands 6, 7. Eine weitere Gegenstandseigenschaft ist das Gewicht. Die äußeren Abmaße der Gegenstände 6, 7 werden durch die Größenmesseinheit 32, beispielsweise zwei Lichtschranken oder Kameras, erfasst. Die Wiegeeinheit 31 ermittelt das Gewicht jedes Gegenstandes 6, 7. Selbstverständlich können auch andere Gegenstandseigenschaften ermittelt werden.

Die ermittelten Gegenstandseigenschaften werden von der Messeinrichtung 30 an die Steuerung 29 weitergegeben, wobei eine Gegenstandseigenschaft schon ausreicht.

Mit den/der Gegenstandseigenschaft/en weist die Steuerung 29 jeden Gegenstand 6, 7 einer von zwei Gegenstandsgruppen zu. Bei der beispielhaften Ausführungsform in den Figuren 1 und 2 bildet eine erste Gegenstandsgruppe die großen und/oder schweren Gegenstände 6. Eine zweite Gegenstandsgruppe bilden alle übrigen, also die kleinen und leichten Gegenstände 7. Ein entsprechender Schwellwert für die Größe und/oder das Gewicht ist in der Steuerung 29 hinterlegt, damit die Steuerung 29 jeden Gegenstand 6, 7 einer Gruppe zuordnen kann. Alternativ können auch mehr als zwei Gegenstandsgruppen aufgeteilt werden.

Die erste Fördereinheit 2 fördert die Gegenstände 6, 7 anschließend zum Separiermittel 3, und zwar zunächst auf die Eingangsweiche 10. Die Steuerung 29 steuert das Endlosförderband 9 und das Endlosförderband 14 so, dass jeweils nur ein Gegenstand 6, 7 sich auf der Eingangsweiche 10 befindet. Die Position der Gegenstände 6, 7 kann durch Lichtschranken (nicht dargestellt) überwacht werden. Je nach Zuordnung zu der ersten oder zweiten Gegenstandsgruppe wird die Eingangsweiche 10 von der Steuerung 29 in ihre erste, obere Stellung oder in ihre zweite, untere Stellung gebracht, so dass der Gegenstand 6, 7 in den ersten oder zweiten Speicherbereich 11, 12 gefördert werden kann. Bei der Darstellung der Figuren 1 und 2 werden große und/oder schwere Gegenstände 6 über die obere Stellung der Eingangsweiche 10 in den ersten Speicherbereich 11 gefördert. Entsprechend werden kleine, leichte Gegenstände 7 über die untere Stellung der Eingangsweiche 10 in den zweiten Speicherbereich 12 befördert. Da die kleinen, leichten Gegenstände 7 geschüttet werden können, befindet sich das Endlosförderband 14 in der unteren Stellung oberhalb des Endlosförderbands 17a. So werden die kleinen, leichten Gegenstände 7 auf das Endlosförderband 17a geschüttet und bilden einen platzsparenden Haufen oder "Bulk". So können viele kleine, leichte Gegenstände 7 aufgenommen werden. Auf jedem Endlosförderband 17a, 17b können separate Haufen gebildet werden. Die Endlosförderbänder 17a, 17b werden dabei separat angetrieben und gesteuert.

Aus den beiden Speicherbereichen 11, 12 werden die Gegenstände 6, 7 über die Ausgangsweiche 13 und die zweite Fördereinheit 4 zum Entladebereich 34 gefördert. Allerdings sind die Gegenstände 6, 7 nun in die Gegenstandsgruppen unterteilt und werden in den Gegenstandsgruppen gruppiert hintereinander auf der zweiten Fördereinheit 4 zum Entladebereich 34 gefördert.

Die zweite Fördereinheit 4 kann dabei entsprechend der gerade geförderten Gegenstandsgruppe in eine geeignete Stellung gebracht werden. In der Stellung in Figur 2 werden nur große und/oder schwere Gegenstände 6 zum Entladebereich 34 gefördert. Hierfür ist das Endlosförderband 24 eingefahren und zusammen mit dem Endlosförderband 23 in einer unteren Stellung. Diese Stellung der zweiten Fördereinheit 4 ist geeignet, dass ein Werker die großen und/oder schweren Gegenstände 6 manuell leicht von der Transporteinrichtung 1 entnehmen und im Transportbehälter 8 stapeln kann. Hierbei kann die Fördereinheit 4 möglichst nahe und in der Höhe angepasst in den Bereich des Transportbehälters 8 gefahren werden, in dem der Werker die Gegenstände 6 stapelt. So wird ein ergonomisches und wenig belastendes Arbeiten ermöglicht. Dabei können die Endlosförderbänder 23, 24 sowohl horizontal als auch vertikal geschwenkt werden.

In Figur 1 werden anders als in Figur 2 kleine, leichte Gegenstände 7 in den Entladebereich 34 gefördert. Hierfür ist die zweite Fördereinheit 4 in einer oberen ausgefahrenen Stellung, in der das Endlosförderband 24 ausgefahren und mit dem Endlosförderband 23 nach oben geschwenkt ist. In dieser Stellung können die vielen kleinen, leichten Gegenstände 7 auf den Stapel aus großen und/oder schweren Gegenständen 6, die bereits im Transportbehälter 8 gestapelt sind, geschüttet werden. Dies ist besonders zeitsparend und einfach für den Bediener.

### Bezugszeichenliste

- 1: Transportvorrichtung
- 2: erste Fördereinheit
- 3: Separiermittel
- 4: zweite Fördereinheit
- 5: Steuereinrichtung
- 6: Gegenstand, Gegenstände
- 7: Gegenstand, Gegenstände
- 8: Transportbehälter
- 9: Endlosförderband
- 10: Eingangsweiche
- 11: erster Speicherbereich
- 12: zweiter Speicherbereich
- 13: Ausgangsweiche
- 14: Endlosförderband
- 15: Drehachse
- 16: Endlosförderband
- 17a, 17b: Endlosförderband
- 18: Endlosförderband
- 19: Drehachse
- 20: Endlosförderband
- 21: Endlosförderband
- 22: Schwenkgelenk
- 23: Endlosförderband
- 24: Endlosförderband
- 25: Schwenkantrieb
- 26: Stützen
- 27: Räder
- 28: Boden
- 29: SPS-Steuerung
- 30: Messreinrichtung
- 31: Wiegeeinheit
- 32: Größenmesseinheit
- 33: Beladebereich
- 34: Entladebereich
- TR: Transportrichtung

## Patentansprüche

1. Transportvorrichtung (1) zum Transportieren von Gegenständen (6, 7) in einer Transportrichtung (TR) von einem Beladebereich (33) zu einem Entladebereich (34) mit einer ersten und einer zweiten Fördereinheit (2, 4), die in der Transportrichtung (TR) hintereinander angeordnet sind, wobei
- ein zwischen der ersten und der zweiten Fördereinheit (2, 4) angeordnetes Separiermittel (3), das zum Separieren der Gegenstände (6, 7) in wenigstens zwei Gegenstandsgruppen in Abhängigkeit von wenigstens einer Gegenstandseigenschaft ausgebildet ist, und
- eine Steuereinrichtung (5), die zum Steuern der Fördereinheiten (2, 4) und des Separiermittels (3) ausgebildet ist und die eine Messeinrichtung (30) umfasst, die zum Ermitteln der wenigstens einen Gegenstandseigenschaft ausgebildet ist, wobei die Steuereinrichtung (5) das Separiermittel (3) in Abhängigkeit von der Gegenstandseigenschaft steuert, und
- wobei das Separiermittel (3) eine in der Transportrichtung (TR) hinter der ersten Fördereinheit (2) angeordnete Eingangsweiche (10) und eine in der Transportrichtung (TR) vor der zweiten Fördereinheit (4) angeordnete Ausgangsweiche (13) umfasst, die jeweils eine erste Stellung und eine zweite Stellung aufweisen, und wobei
- im Betrieb in der ersten Stellung der Eingangsweiche (10) die Gegenstände (6, 7) in die erste Gegenstandsgruppe und in der zweiten Stellung in die zweite Gegenstandsgruppe separiert werden und
- wobei im Betrieb in der ersten Stellung der Ausgangsweiche (13) die Gegenstände (6,7) der ersten Gegenstandsgruppe und in der zweiten Stellung die Gegenstände (6, 7) der zweiten Gegenstandsgruppe zur zweiten Fördereinheit (4) gefördert werden, und
- wobei in der Transportrichtung (TR) an das Separiermittel (3) anschließend die zweite Fördereinheit (4) angeordnet ist, **dadurch gekennzeichnet, dass**
- die zweite Fördereinheit (4) zwei im Wesentlichen horizontal ausgerichtete und parallel zueinander angeordnete Endlosförderbänder (20, 21) umfasst, die so miteinander verbunden sind, dass sie teleskopierbar sind,
- und die zweite Fördereinheit (4) zwei um ein Schwenkgelenk (22) schwenkbare Endlosförderbänder (23, 24) umfasst, und
- das Endlosförderband (20) mit seinem in der Transportrichtung (TR) vorderen Ende mit dem hinteren Ende des Endlosförderbands (18) der Ausgangsweiche (13) fluchtet.

2. Transportvorrichtung (1) nach einem der oben genannten Ansprüche,
**gekennzeichnet durch**,
zwei jeweils einer Gegenstandsgruppe zugeordneten Speicherbereiche (11, 12), in welche die Gegenstände (6, 7) separierbar sind.

3. Transportvorrichtung (1) nach Anspruch 2, **dadurch gekennzeichnet, dass** die Speicherbereiche (11, 12) in vertikaler Richtung übereinander angeordnet sind.

4. Transportvorrichtung (1) nach einem der oben genannten sprüche,
**dadurch gekennzeichnet, dass** die Eingangs- (10) und/oder die Ausgangsweiche (13) und/oder die Speicherbereiche (11, 12) als separate Endlosförderbänder (14, 16, 17a, 17b, 18) zum Transportieren der Gegenstände (6, 7) in der Transportrichtung (TR) ausgebildet sind.

5. Transportvorrichtung (1) nach Anspruch 2 bis 4, **dadurch gekennzeichnet, dass** der erste und/oder zweite Speicherbereich (11, 12) mehrere hintereinander angeordnete Endlosförderbänder (17a, 17b) umfasst.

6. Transportvorrichtung (1) nach einem der oben genannten Ansprüche,
**dadurch gekennzeichnet, dass** die Steuereinrichtung (5) eine Zähleinrichtung umfasst, welche jeweils die Anzahl der Gegenstände (6, 7) der ersten und der zweiten Gegenstandsgruppe zählt, und dass die Steuereinrichtung das Separiermittel (3) in Abhängigkeit von diesen Anzahlen steuert.

7. Transportvorrichtung (1) nach einem der oben genannten Ansprüche,
**dadurch gekennzeichnet, dass** die zweite Fördereinheit (4) eine erste und eine zweite Stellung aufweist, wobei jede Stellung einer der Gegenstandsgruppen zugeordnet ist.

8. Verfahren zum Transportieren von Gegenständen (6,7) mit der Transportvorrichtung nach Anspruch 1, bei dem die Gegenstände (6, 7) in einer Transportrichtung (TR) von einem Beladebereich (33) in einen Entladebereich (34) gefördert werden, wobei während des Förderns die Gegenstände (6, 7) in Abhängigkeit von wenigstens einer Gegenstandseigenschaft in wenigstens zwei Gegenstandsgruppen separiert werden und anschließend zunächst Gegenstände (6, 7) der einen und danach der anderen Gegenstandsgruppe zum Entladebereich (34) gefördert werden.

## Claims

1. Transporting device (1) for transporting objects (6, 7) in a transporting direction (TR) from a loading region (33) to an unloading region (34) with a first and a second conveying unit (2, 4), which are disposed in the transporting direction (TR) one behind the other, wherein
- a separating means (3) disposed between the first and the second conveying unit (2, 4), which is embodied for separating the objects (6, 7) into at least two object groups as a function of at least one object property, and
- a control device (5), which is embodied for controlling the conveying units (2, 4) and the separating means (3) and which includes a measuring device (30) which is embodied for establishing the at least one object property, wherein the control device (5) controls the separating means (3) as a function of the object property, and
- wherein the separating means (3) includes an input switch (10) disposed in the transporting direction (TR) behind the first conveying unit (2) and an output switch (13) disposed in the transporting direction (TR) before the second conveying unit (4), which each have a first position and a second position, and wherein
- in operation the objects (6, 7) are separated into the first object group in the first position and into the second object group in the second position and
- wherein, in operation, in the first position the objects (6, 7) of the first object group and in the second position the objects (6, 7) of the second object group are conveyed to the second conveying unit (4), and
- wherein the second conveying unit (4) is disposed following on from the separating means (3) in the transporting direction (TR), **characterised in that**
- the second conveying unit (4) includes two endless conveyor belts (20, 21) which are essentially aligned horizontally and disposed in parallel with one another, which are connected to one another such that they are telescopic,
- and the second conveying unit (4) includes two endless conveyor belts (23, 24) which are able to be pivoted around a hinge joint (22), and
- the front end of the endless conveyor belt (20) in the transporting direction (TR) is flush with the rear end of the endless conveyor belt (18) of the output switch (13).

2. Transporting device (1) according to one of the preceding claims,
**characterised by**
two storage regions (11, 12) each assigned to an object group, into which the objects (6, 7) are able to be separated.

3. Transporting device (1) according to claim 2,
**characterised in, that** the storage regions (11, 12) are disposed in a vertical direction above one another.

4. Transporting device (1) according to one of the preceding claims,
**characterised in that** the input (10) and/or the output switch (13) and/or the storage regions (11, 12) are embodied as separate endless conveyor belts (14, 16, 17a, 17b, 18) for transporting the objects (6, 7) in the transporting direction (TR).

5. Transporting device (1) according to claim 2 to 4,
**characterised in that** the first and/or second storage area (11, 12) include a number of endless conveyor belts (17a, 17b) disposed one behind the other.

6. Transporting device (1) according to one of the preceding claims,
**characterised in that** the control device (5) includes a counting device which in each case counts the number of objects (6, 7) of the first and the second object group, and that the control device controls the separating means (3) as a function of these counts.

7. Transporting device (1) according to one of the preceding claims,
**characterised in that** the second conveying unit (4) has a first and a second position, wherein each position is assigned to one of the object groups.

8. Method for transporting objects (6, 7) using the transporting device according to claim 1, in which the objects (6, 7) are conveyed in the transporting direction (TR) from a loading region (33) into an unloading region (34),
wherein during conveying, the objects (6, 7) are separated as a function of at least one object property, into at least two object groups and subsequently, firstly objects (6, 7) of the one object group and then of the other object group are conveyed to the unloading region (34).

## Revendications

1. Dispositif de transport (1) destiné au transport d'objets (6, 7) dans une direction de transport (TR) depuis une zone de chargement (33) vers une zone de déchargement (34) avec une première et une seconde unité de convoyage (2, 4) qui sont disposées l'une derrière l'autre dans la direction de transport (TR),
dans lequel
- un moyen de séparation (3) disposé entre la première et la seconde unité de convoyage (2, 4), lequel moyen de séparation est réalisé pour la séparation des objets (6,7) dans au moins deux groupes d'objets en fonction d'au moins une propriété d'objet, et
- un dispositif de commande (5) qui est réalisé pour la commande des unités de convoyage (2, 4) et du moyen de séparation (3) et qui comprend un dispositif de mesure (30) qui est réalisé pour la détermination de l'au moins une propriété d'objet, dans lequel le dispositif de commande (5) commande le moyen de séparation (3) en fonction de la propriété d'objet, et
- dans lequel le moyen de séparation (3) comprend un aiguillage en entrée (10) disposé dans la direction de transport (TR) derrière la première unité de convoyage (2) et un aiguillage en sortie (13) disposé avant la seconde unité de convoyage (4) qui présentent respectivement une première position et une seconde position, et dans lequel
- pendant le fonctionnement dans la première position de l'aiguillage en entrée (10) les objets (6, 7) sont séparés dans le premier groupe d'objets et dans la seconde position dans le second groupe d'objets et
- dans lequel pendant le fonctionnement dans la première position de l'aiguillage en sortie (13) les objets (6, 7) du premier groupe d'objets et dans la seconde position les objets (6, 7) du second groupe d'objets sont convoyés vers la seconde unité de convoyage (4), et
- dans lequel dans la direction de transport (TR) la seconde unité de convoyage (4) est disposée à la suite du moyen de séparation (3), **caractérisé en ce que**
- la seconde unité de convoyage (4) comprend deux bandes de convoyage sans fin (20, 21) orientées sensiblement à l'horizontale et disposées parallèlement l'une par rapport à l'autre, qui sont reliées l'une à l'autre de sorte qu'elles sont télescopiques,
- et la seconde unité de convoyage (4) comprend deux bandes de convoyage sans fin (23, 24) pouvant pivoter autour d'une articulation pivotante (22), et
- la bande de convoyage sans fin (20) avec son extrémité avant dans la direction de transport (TR) est alignée avec l'extrémité arrière de la bande de convoyage sans fin (18) de l'aiguillage en sortie (13).

2. Dispositif de transport (1) selon la revendication 1, **caractérisé par**
deux zones d'enregistrement (11, 12) associées à respectivement un groupe d'objets, dans lesquelles les objets (6, 7) sont séparables.

3. Dispositif de transport (1) selon la revendication 2, **caractérisé en ce que** les zones d'enregistrement (11, 12) sont disposées l'une par-dessus l'autre dans la direction verticale.

4. Dispositif de transport (1) selon l'une des revendications précédentes, **caractérisé en ce que** les aiguillages en entrée (10) et/ou en sortie (13) et/ou les zones d'enregistrement (11, 12) sont réalisés en tant que bandes de convoyage sans fin séparées (14, 16, 17a, 17b, 18) destinées au transport des objets (6, 7) dans la direction de transport (TR).

5. Dispositif de transport (1) selon les revendications 2 à 4, **caractérisé en ce que** la première et/ou la seconde zone d'enregistrement (11, 12) comprennent plusieurs bandes de convoyage sans fin (17a, 17b) disposées l'une derrière l'autre.

6. Dispositif de transport (1) selon l'une des revendications précédentes, **caractérisé en ce que** le dispositif de commande (5) comprend un dispositif de comptage qui compte respectivement le nombre des objets (6, 7) du premier et du second groupe d'objets, et **en ce que** le dispositif de commande commande le moyen de séparation (3) en fonction de ces nombres.

7. Dispositif de transport (1) selon l'une des revendications précédentes, **caractérisé en ce que** la seconde unité de convoyage (4) présente une première et une seconde position, dans lequel chaque position est associée à l'un des groupes d'objets.

8. Procédé destiné au transport d'objets (6, 7) avec le dispositif de transport selon la revendication 1, dans lequel les objets (6, 7) sont convoyés dans une direction de transport (TR) depuis une zone de chargement (33) dans une zone de déchargement (34), dans lequel pendant le convoyage les objets (6, 7) sont séparés en fonction d'au moins une propriété d'objet en au moins deux groupes d'objets et ensuite dans un premier temps des objets (6, 7) de l'un et dans un second temps de l'autre groupe d'objets sont convoyés vers la zone de déchargement (34).
